# EUROPÄISCHE PATENTSCHRIFT

(11) **EP 0 649 006 B1**
(45) Veröffentlichungstag und Bekanntmachung des Hinweises auf die Patenterteilung: **20.08.1997**
(21) Anmeldenummer: 94116156.4
(22) Anmeldetag: 13.10.1994
(51) Int. Cl.: G01G 13/02, G01G 19/393, B65B 37/04

(54) **Vorrichtung zum Beschicken einer einer Verpackungseinrichtung vorgeschalteten Wägeeinrichtung mit zerbrechlichen Lebensmitteln unregelmässiger Grösse und ähnlichen Produkten, inbesondere Kartoffelchips**
Device for feeding a balance, connected to a packing apparatus, with fragile food products of irregular dimension and similar products, especially potato crisps
Dispositif pour alimenter une balance, connecté à une machine d'emballage, avec des produits alimentaires fragiles de formes irrégulières et produits analogues, en particulier de pomme de terre frites

(30) Priorität: 14.10.1993 DE 4335074
(43) Veröffentlichungstag der Anmeldung: 19.04.1995
(73) Patentinhaber: MULTIPOND GmbH, D-84478 Waldkraiburg (DE)
(72) Erfinder:
(74) Vertreter: Görg, Klaus, Dipl.-Ing.

(56) Entgegenhaltungen:
- EP-A- 0 074 826
- EP-A- 0 272 666
- DE-A- 3 618 041
- GB-A- 2 042 194
- US-A- 3 308 994

## Beschreibung

Die Erfindung betrifft eine Vorrichtung zum Beschicken einer einer Verpackungseinrichtung vorgeschalteten Wägeeinrichtung mit zerbrechlichen Lebensmitteln unregelmäßiger Größe und ähnlichen Produkten, insbesondere Kartoffelchips, mit einer Dosierrinne mit einer freien Abgabeseite, einem Wägebehälter und/oder einem dem Wägebehälter vorgeschalteten Vorbehälter.

Bei der Verpackung von Lebensmitteln werden neben allgemeinen lebensmitteltechnischen Anforderungen auch sehr hohe Anforderungen an die Genauigkeit des Abfüllgewichtes und an die automatisierte Handhabung der teilweise mechanisch äußerst empfindlichen Produkte gestellt. Dies ist insbesondere bei zerbrechlichen Lebensmittelprodukten, die aus natürlichen Ausgangsprodukten mit sehr unterschiedlicher Größe und Gewicht gewonnen werden, und daher in der Regel auch als Endprodukte über unregelmäßige Größen und/oder Gewichte verfügen, wie etwa Kartoffelchips, mit nicht unerheblichem Aufwand verbunden.

Zum Wiegen der genannten Lebensmittelprodukte finden konventionelle Abfüll-Waagen, linear angeordneten Waagen oder auch spezielle Teilmengen-Kombinationswaagen Anwendung. Vor allem die Teilmengen-Kombinationswaagen sind gut dazu geeignet, aus einer Vielzahl von Einzelstücken unterschiedlicher Gewichte eine möglichst genau an einem vorgegebenen Sollgewicht liegende Abfüllmenge zusammenzustellen. Hierzu werden Teilmengen unterschiedlicher Gewichte in Vorbehälter abgewogen und nachfolgend nach einem bestimmten System diejenigen Teilmengen zu einer Abfüllmenge kombiniert, deren Summe ihrer Teilgewichte dem vorgegebenen Sollgewicht der Abfüllmenge am nächsten kommt. Nach dieser Methode lassen sich sehr genau Ergebnisse erzielen.

Aus der EP-A-0 074 826 ist eine Beschickungsvorrichtung für eine solche Teilmengen-Kombinationswaage bekannt.

Es ist eine Verpackungsanlage für Kartoffelchips bekannt, unter anderem bestehend aus ein oder mehreren Dosierrinnen, ein oder mehreren Waagen mit jeweiligen Wägebehältern, je nach Waagentyp gegebenenfalls zusätzlichen Vorratsbehältern, und einer den Waagen nachgeschalteten Verpackungsmaschine. Die Verpackungsmaschine ist hierbei in der Regel als Schlauchbeutelmaschine ausgelegt. Die zu verpackenden Kartoffelchips werden erst über die Dosierrinnen in die Wägebehälter gefördert, gewogen und dann anschließend über Füllrohre in einen Verpackungsbeutel geleitet und dort luftdicht eingeschlossen.

Während der sich aus dem Abwiegen und Abfüllen zusammensetzenden Vorstufe des reinen Verpackungsvorganges kommt es häufig vor, daß zu große Kartoffelchips sowohl die Waagen als auch die den Waagen nachgeschalteten Füllrohre der Verpackungsmaschine verstopfen, wodurch ungünstige Leerlaufzeiten beim Abwiegen und Verpacken entstehen.

Zur Abhilfe dieser Verstopfungserscheinung bei Füllrohren ist es bekannt, einen schwenkbaren und im Takt der Verpackungsanlage arbeitenden Stopfarm oben in einem jeweiligen Füllrohr der Verpackungsanlage anzubringen. Der Stopfarm schiebt die im Füllrohr befindlichen Kartoffelchips zyklisch in Richtung des Verpackungsbeutels.

Eine Stopfvorrichtung ist beispielsweise aus der US-A-3 308 994 bekannt.

Diese bekannte Vorrichtung verfügt jedoch über erhebliche Nachteile. So wird zum Beispiel aufgrund des Übereinanderliegens der Kartoffelchips in einem Füllrohr beim Stopfen eine Vielzahl von Kartoffelchips aus der Gesamtmenge des Verpackungsinhaltes in sehr kleine Teile zerbrochen, was verkaufstechnisch, im Hinblick auf den Endverbraucher, zu beanstanden ist. Ferner nimmt die bekannte Vorrichtung viel Platz an einer Stelle der Verpackungsmaschine ein, die ohnehin aufgrund der den spezifischen Anforderungen angepaßten Struktur extrem beengt ist. Dies führt zu einer konstruktiv sehr aufwendigen und demzufolge teuren Ausgestaltung. Schließlich wird die Leistung der gesamten Verpackungsanlage aufgrund der aus den oben genannten Effekten resultierenden ungünstigen Leerlaufzeiten stark vermindert. Darüber hinaus können Verstopfungserscheinungen in den der Verpackungsmaschine vorgeschalteten Waagen mit der bekannten Vorrichtung in keinster Weise verhindert oder reduziert werden.

Der Erfindung liegt daher das technische Problem zugrunde, eine Vorrichtung zu schaffen, die auf einfache und effektive Weise und ohne eine verkaufstechnisch ungünstige Beeinträchtigung der zerbrechlichen Lebensmittel oder ähnlicher Produkte ein Verstopfen sowohl der Füllrohre der Verpackungsmaschine, als auch der der Verpackungsmaschine vorgeschalteten Wägeeinrichtungen unterbindet und somit einen sicheren, funktionellen und wirtschaftlichen Betrieb dieser Verpackungseinrichtungskomponenten gewährleistet.

Diese Aufgabe wird erfindungsgemäß dadurch gelöst, daß bei der mit einer Dosierrinne mit einer freien Abgabeseite, einem Wägebehälter und/oder einem dem Wägebehälter vorgeschalteten Vorbehälter ausgestatteten Vorrichtung zum Beschicken einer einer Verpackungseinrichtung vorgeschalteten Wägeeinrichtung mit zerbrechlichen Lebensmitteln unregelmäßiger Größe und ähnlichen Produkten, insbesondere Kartoffelchips, die Dosierrinne an ihrer freien Abgabeseite mit einer Abschlußwand verschlossen und an der Abgabeseite der Dosierrinne eine Austrittsöffnung im Boden vorgesehen ist, die Größe der Austrittsöffnung relativ zur Größe der jeweils zu wiegenden und zu verpackenden Lebensmittel eine maximale Sollgröße definiert, der Boden der Dosierrinne einen Randbereich um die Austrittsöffnung und eine Auflage für die Sollgröße überschreitende Lebensmittel bildet, mindestens eine Brechvorrichtung der Verpackungseinrichtung vorgeschaltet, über der Austrittsöffnung angeordnet und in vertikaler Richtung bewegbar sowie steuerbarer ist, und Mittel zur Steuerung der Brechvorrichtung vorgesehen sind.

Die Steuerung der Brechvorrichtung kann im Takt der Waage oder auf andere Weise, etwa über eine Programmsteuerung in Verbindung mit einem Sensor ausgeführt werden.

Im Sinne der Erfindung muß es sich bei den den zerbrechlichen Lebensmitteln ähnlichen Produkten nicht zwingenderweise um Lebensmittel handeln, sondern es können darunter auch Produkte oder Gegenstände verstanden werden, die zum Beispiel lediglich von ihren rein geometrischen oder mechanischen Eigenschaften den genannten Lebensmitteln ähneln.

Die erfindungsgemäße Vorrichtung verhindert auf vorteilhafte Art und Weise sowohl das Verstopfen der Wägeeinrichtung als auch gleichzeitig des der Wägeeinrichtung nachgeschalteten Füllrohres der Verpackungsmaschine, wobei die dazu erforderlichen Maßnahmen schon vor dem Eintritt des Wägegutes in die der Verpackungsmaschine vorgeschalteten Wägeeinrichtung erfolgen. Leerlaufzeiten beim Wiegen und Verpacken werden so vermieden. Die Brechvorrichtung zerbricht die über die definierte Sollgröße hinausgehenden zerbrechlichen Lebensmittel oder ähnlichen Produkte in verhältnismäßig große Stücke, die aber nun durch die Austrittsöffnung im Boden der Dosierrinne fallen, wodurch ein Stopfvorgang und eine unvorteilhafte Krümelbildung weitgehend vermieden wird. Schließlich ist dadurch stets nur das über der Austrittsöffnung liegende zu große Stück oder eine relativ kleine Anzahl Stücke vom Brechvorgang betroffen, nicht aber eine Vielzahl von im Füllrohr klemmenden Stücken, wie bei bekannten Stopfeinrichtungen. Die Gesamtanzahl von unvermeidlichen Bruchstücken in einer Verpackung wird dadurch stark reduziert. Somit kann ein verkaufstechnisch ansprechenderes Produkt erzielt werden. Durch die Austrittsöffnung in der Dossierrinne und den um die Austrittsöffnung befindlichen Randbereich wird eine Auflage geschaffen, durch die das Brechen in große Teile überhaupt erst konstruktiv ermöglicht wird. Die so erzeugten großen Bruchstücke fallen frei durch die Austrittsöffnung und müssen auch nachfolgend im Füllrohr nicht gestopft werden. Die erfindungsgemäße Vorrichtung, und davon insbesondere die Brechvorichtung, kann sehr platzsparend ausgelegt werden, ist einfach und kostengünstig herzustellen und arbeitet sehr effektiv und wirtschaftlich. Dadurch wird die Leistung der gesamten Verpackungseinrichtung gesteigert.

Die erfindungsgemäße Brechvorrichtung ist vorteilhafterweise als ein direkt oder indirekt durch Antriebsmittel betätigbarer Stößel ausgebildet. In diesem Sinne kann der Stößel zum Beispiel als Kolbenstange eines pneumatischen oder hydraulischen Zylinders, als Schubstange eines elektrischen Spindelmotors oder in Verbindung mit sonstigen, etwa elektromagnetischen Antriebsmitteln gestaltet sein. Unter einer indirekten Betätigung wird zum Beispiel ein Antrieb über einen Umlenkmechanismus oder ähnliches verstanden.

Es hat sich als Vorteil herausgestellt, daß der Stößel durch die Mittel zur Steuerung der Brechvorrichtung und/oder eine Steuereinrichtung der Wägeeinrichtung in seinem senkrechten Weg in Richtung Austrittsöffnung so begrenzt ist, daß auf der Austrittsöffnung liegende zu große Lebensmittel oder ähnliche Produkte gerade eben gebrochen werden, um dadurch immer noch große Bruchstücke zu erhalten, die nun aber durch die Austrittsöffnung der Dosierrinne fallen.

Dadurch, daß die die Austrittsöffnung rund, oval, eckig oder in einer anderen Weise geformt ist, kann auf positive Weise eine Anpassung an die jeweils zu wiegenden und zu verpackenden Lebensmittel oder ähnlichen Produkte erzielt werden.

Als eine weitere vorteilhafte Augestaltungsform ist vorgesehen, daß das die Austrittsöffnung mit dem Randbereich und die Abschlußwand enthaltende Teilstück der Dosierrinne ein vom übrigen Bereich der Dosierrinne abnehm- und austauschbares Mundstück bildet. Auf diese Weise ist ebenfalls eine sehr einfache Anpassung an unterschiedliche zu verpackende Lebensmittel oder ähnliche Produkte möglich.

Zur vorteilhaften Vereinfachung der Handhabung, Wartung und des Austauschvorganges ist das Mundstück mittels ein oder mehrerer Schnellverschlüsse werkzeuglos und/oder mit anderen Befestigungselementen mit der Dosierrinne verbindbar.

Ferner ist zu diesem Zweck die Dosierrinne und/oder das Mundstück mit Führungselementen ausgestattet.

In einer besonders vorteilhaften Ausgestaltungsvariante ist die Brechvorrichtung an einem über der Dosierrinne angeordneten Halteelement befestigt, wobei das Halteelement gerade, gebogen, ringförmig geschlossen oder in anderer Weise geformt ist. Aufgrund dieser Maßnahmen läßt sich eine platzsparende und konstruktiv günstige Anordnung der Brechvorrichtung und eine der Orientierung einer oder mehrere Dossierrinnen angepaßte Verlegung des Halteelementes realisieren.

Es hat sich als Vorteil erwiesen, daß das Halteelement über Mittel zum Übertragen von Energie verfügt und/oder selbst als Energieträger ausgebildet ist. So kann das Halteelement beispielsweise pneumatische und hydraulische Leitung oder elektrische Kabel in seinem Inneren aufnehmen bzw. bei entsprechend druckdichter Ausführung selbst Druckluft oder Hydraulikflüssigkeit zur Versorgung der Antriebsmittel für den Stößel der Brechvorrichtung führen. Die Führung dieser Mittel innerhalb des Halteelementes ist zudem aus lebensmitteltechnischen Gründen günstig.

Besteht das Halteelement aus mehreren miteinander verbindbaren Einzelteilen, läßt es sich zum Verlegen von energieübertragenden Mitteln, für Wartungszwecke oder zum Erreichen von unterhalb des Halteelementes befindlichen Komponenten, wie etwa einer Waage, leicht öffnen oder demontieren.

Hierzu ist erfindungsgemäß vorgesehen, daß die Einzelteile des Halteelementes starre, flexible, schwenk- und/oder drehbare oder andersartige Befestigungs- oder Kupplungselemente zum Herstellen einer Verbindung untereinander und/oder zusätzliche Adapter für die Mittel zum Übertragen von Energie besitzen.

In besonders günstiger Weise lassen sich die obenbeschriebenen Ausgestaltungsformen des Halteelementes durch Ausbildung des Halteelementes als Rohr oder adäquates Bauteil realisieren.

Ein Ausführungsbeispiel der Erfindung mit weiteren Einzelheiten und vorteilhaften Weiterbildungen ist nachfolgend anhand der Zeichnungen beschrieben. Es zeigen:
- Fig. 1: eine schematische perspektivische Darstellung der erfindungsgemäßen Vorrichtung,
- Fig. 2: eine weitere Ausführungsform der erfindungsgemäßen Vorrichtung in schematischer perspektivischer Ansicht, und
- Fig. 3: eine schematische perspektivische Illustration eines Halteelementes mit zwei Brechvorrichtungen.

In der nachfolgenden Beschreibung bevorzugter Ausführungsformen der erfindungsgemäßen Vorrichtung erhalten gleiche oder in ihren Funktionen ähnliche Bauteile in allen Figuren jeweils die gleichen Bezugszeichen, insofern nicht eine zusätzliche Differenzierung erforderlich ist.

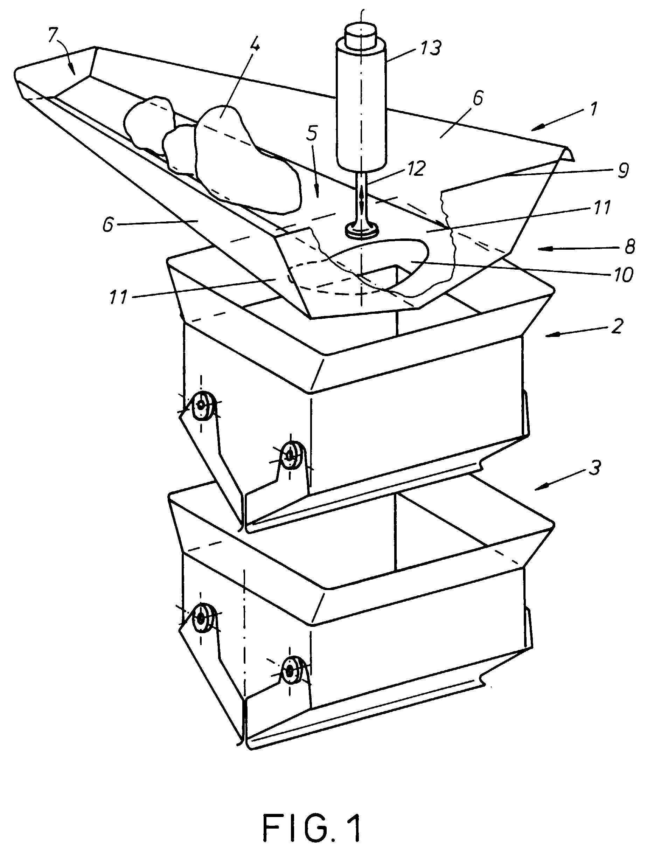

Wie in Fig. 1 veranschaulicht, besteht eine erfindungsgemäße Ausführungsform der Vorrichtung aus einer Dosierrinne 1, einem unter der Dosierrinne 1 befindlichen Vorbehälter 2, der wiederum über einem Wägebehälter 3 liegt. Vorbehälter 2 und Wägebehälter 3 arbeiten zusammen nach dem Prinzip der Teilmengen-Kombinationswaage. Der Teilmengen-Kombinationswaage, die aus ein oder mehreren Wägesystemen besteht, die üblicherweise um den oberen Rand eines Sammeltrichters herum angeordnet sind, und von denen hier nur ein Wägesystem ohne Trichter gezeichnet ist, ist am Trichterauslauf stets eine Verpackungsmaschine nachgeschaltet, in deren Füllrohr die kombinierte Gesamt-Gewichtsportion fällt. Befestigungselemente oder Führungen für die obigen Bauteile sowie angrenzende oder umgebende Strukturen sind aus Gründen der besseren Übersicht ebenfalls nicht dargestellt.

Die Dosierrinne 1 besitzt einen V-förmigen symetrischen Boden 5 mit sich daran jeweils anschließenden seitlich hochgezogenen und leicht geneigten Seitenwänden 6, sowie eine Eingabeseite 7, an der Wägegut in die Dosierrinne 1 eintritt, und eine freie Abgabeseite 8, über die das Wägegut die Dosierinne 1 üblicherweise wieder verläßt. Die Dosierrinne 1 ist mit einem elektromagnetischen Vibrationsantrieb ausgestattet, der im bekannten Mikrowurf, förderleistungsgeregelt durch die Steuereinrichtung des Wägeautomaten, das Wägegut zur Abgabeseite transportiert.

Für die weitere Beschreibung wird angenommen, daß es sich bei dem Wägegut um Kartoffelchips 4 unterschiedlicher Größe und Gewicht handelt, die nach dem Wiegen zur Verpackungsmaschine weitergeleitet und dort verpackt werden. Kartoffelchips sind bekanntlich äußerst zerbrechlich.

Die freie Abgabeseite 8 der Dosierrinne 1 ist erfindungsgemäß durch eine Abschlußwand 9 verschlossen, und an der Abgabeseite 8 ist eine Austrittsöffnung 10 im Boden 5 ausgearbeitet. Die Höhe der Abschlußwand 9 ist der der Seitewände 6 der Dosierrinne 1 angepaßt. Die Größe oder der Durchmesser der Austrittsöffnung 10 definiert relativ zur Größe der zu wiegenden und anschließend zu verpackenden Kartoffelchips 4 eine maximale Sollgröße. Diese Sollgröße ist in der Regel ein empirisch oder statistisch ermittelter Wert, der eine Produktgröße repräsentiert, die unter keinen Umständen zu einer Verstopung der Wägeeinrichtung, nämlich des Vorbehälters 2 und des Wägebehälters 3, oder der Füllrohre der nachgeschalteten Verpackungsmaschine (nicht gezeigt) durch das Wägegut führt. Die Sollgröße kann von Produkt zu Produkt natürlich erheblich variieren. Die Form der Austrittsöffnung 10 ist ebenfalls auf das jeweilige Produkt abgestimmt. Im vorliegenden Fall, mit Kartoffelchips 4 als Wägegut, besitzt die Austrittsöffnung 10 eine ovale bis nierenförmige Gestaltung.

Die Breite des Bodens 5 der Dosierrinne 1, die Größe der Austrittsöffnung 10 und der Abstand der Abschlußwand 9 zum Rand der Austrittsöffnung 10 sind zudem so aufeinander abgestimmt, daß der Boden 5 einen relativ zur Größe der Kartoffelchips 4 schmalen Randbereich 11 um die Austrittsöffnung 10 herum bildet.

Mittig über der Austrittsöffnung 10 ist ein als Brechvorrichtung fungierender und als Kolbenstange eines Druckluftzylinders 13 ausgebildeter Stößel 12 angeordnet. Der Stößel 12 ist in vertikaler Richtung bewegbar. Dies wird durch Pfeile in der Fig. 1 angedeutet.

An der Eingabeseite 7 in die Dosierrinne 1 geleitete und durch den Vibrationsantrieb weitgehend vereinzelte Kartoffelchips 4 rutschen zur Abgabeseite 8, wobei sich die Kartoffelchips 4 infolge des V-förmig gestalteten Bodens 5 zur Mittel-Längsachse der Dosierrinne 1 hin orientieren. Auf diese Weise gelangen die Kartoffelchips 4 zur Austrittsöffnung 10. Kartoffelchips 4, die innerhalb der vorgegebenen Sollgröße liegen, fallen ungehindert durch die Austrittsöffnung 10 hindurch und gelangen in den Vorbehälter 2 oder direkt in den Wägebehälter 3.

Ein die Sollgröße überschreitender bzw. zu großer Kartoffelchip 4 hingegen wird mittig über die Austrittsöffnung 10 gefördert und kommt dabei auf dem um die Austrittsöffnung 10 herum befindlichen Randbereich 11 zu liegen. Die Abschlußwand 9, mit ihrem auf die Größe der Kartoffelchips 4 abgestimmten Abstand zum Rand der Austrittsöffnung 10, übernimmt dabei eine Stopperfunktion und gewährleistet diese für den nun folgenden Brechvorgang relevante Position eines Kartoffelchip 4.

Der in einem bestimmten Modus, zum Beispiel im Takt der Wägeeinrichtung oder über eine elektronische Programmsteuerung, betätigte Stößel 12, drückt bei einer Abwärtsbewegung von oben auf den über der Austrittsöffnung 10 und auf dem Randbereich 11 aufliegenden Kartoffelchip und bricht diesen in mehrere verhältnismäßig große Bruchstücke, die durch die Austrittsöffnung 10 hindurch in den Vorbehälter 2 fallen.

Alle Wägebehälter 3 der Wägesysteme einer Teilmengen-Kombinationswaage enthalten so nur Kartoffelchips 4 oder Bruchstücke davon, die innerhalb der von der Austrittsöffnung 10 vorgegebenen Sollgröße liegen, so daß weder die Vorbehälter 2 noch das Füllrohr oder andere Organe der nachgeschalteten Verpackugsmaschine verstopfen können.

Bei der Auslegung des Stößels 12 ist darauf zu achten, daß der Stößeldurchmesser nicht zu klein ausfällt und einen Kartoffelchip 4 womöglich nur durchstößt, nicht aber zerbricht, was zwangsläufig zu einer Fehlfunktion führt. Der Stößel 12 ist ferner durch elektromagnetische Steuerventile 26 in seinem senkrechten Weg in Richtung Austrittsöffnung 10 so begrenzt, daß auf der Austrittsöffnung 10 liegende, zu große Kartoffelchips 4 gerade eben gebrochen werden.

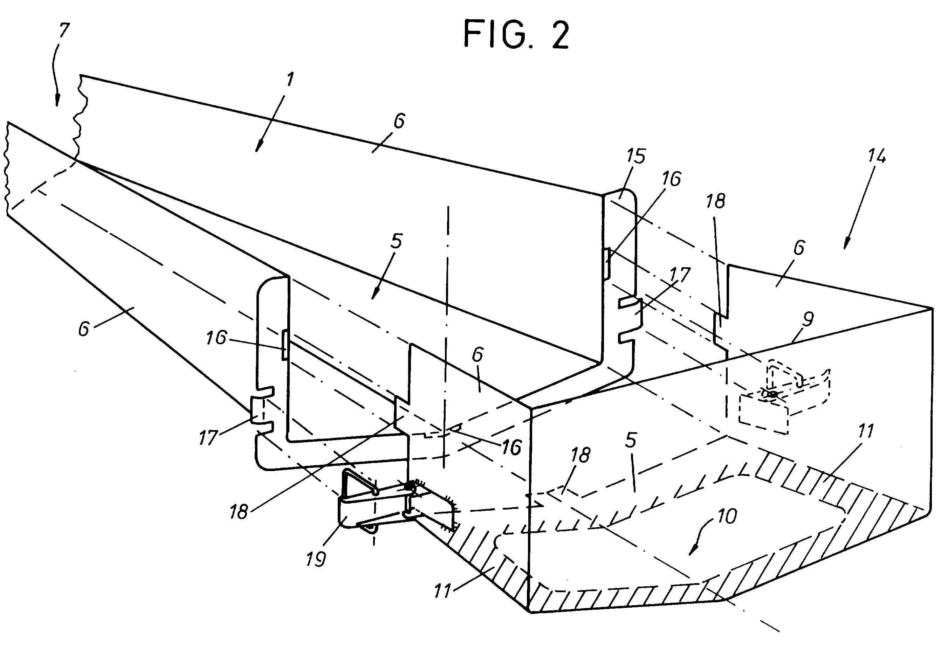

Der Fig. 2 ist eine weitere Ausführungsform der erfindungsgemäßen Vorrichtung zu entnehmen. Die grundlegende Ausgestaltung dieser Vorrichtung entspricht derjenigen gemäß Fig. 1, wie oben detailliert beschrieben.

Gemäß Fig. 2 bildet das die Austrittsöffnung 10 mit dem Randbereich 11 und die Abschlußwand 9 enthaltende Teilstück der Dosierrinne 1 ein vom übrigen Bereich der Dosierrinne 1 abnehm- und austauschbares, separates Mundstück 14. Die Austrittsöffnung 10 des Mundstückes 14 ist im vorliegenden Fall im wesentlichen rechteckig gestaltet. Zur besseren Anschauung ist der Randbereich 11 in der Zeichnung schraffiert dargestellt.

Die Dosierrinne 1 verfügt an ihrer der Eingabeseite 7 gegenüberliegenden freien Seite über einen flanschartigen Ansatz 15 mit Führungsschlitzen 16 und Widerlagern 17.

An der dem Ansatz 15 der Dosierrinne 1 gegenüberliegenden freien Seite des Mundstückes 14 sind an den Seitenwänden 6 und dem Boden 5 rechteckige Führungszapfen 18 angeformt, die mit den Führungsschlitzen 16 des Ansatzes 15 korrespondieren. Das Mundstück 14 kann auf diese Weise leicht auf die Dosierrinne 1 aufgesteckt werden. Mittels seitlich und außen an den Seitenwänden 6 des Mundstückes 14 fixierter Klappverschlüsse 19 wird eine feste aber wieder lösbare Verbindung mit der Dosierrinne 1 hergestellt. Zum Verbinden greifen dabei die Spannbügel der Klappverschlüsse 19 über die Widerlager 17 am Ansatz 15 der Dosierrinne 1.

Bei Verwendung ein und derselben Dosierrinne 1 läßt sich durch verschiedene, hinsichtlich der jeweiligen spezifischen Anforderungen entsprechend ausgestaltete, beliebig austauschbare Mundstücke 14 ein breites Produktspektrum und unterschiedliche Wägesysteme abdecken.

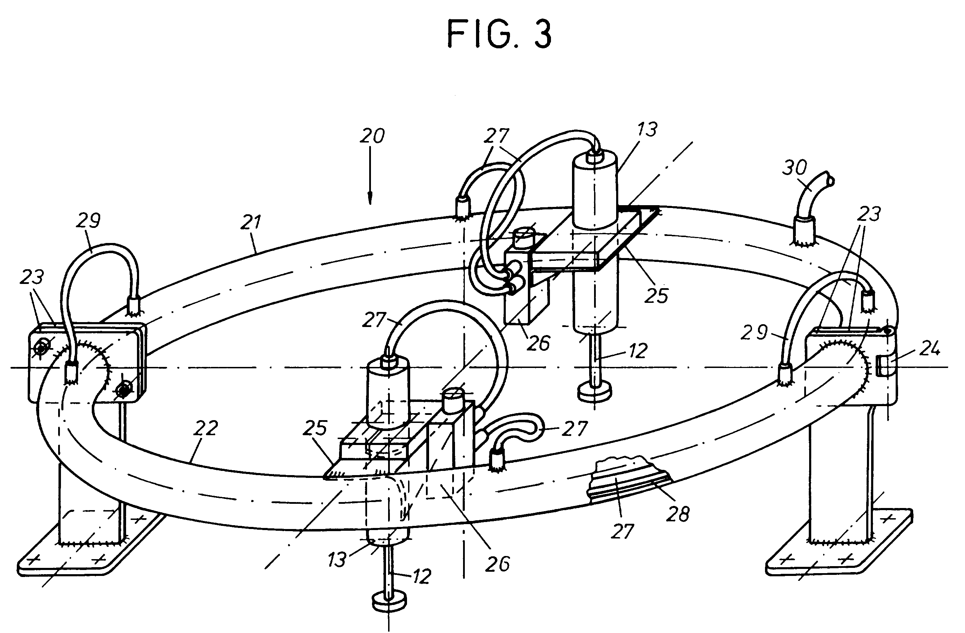

In der Fig. 3 ist ein Halteelement 20 für zwei aus Druckluftzylindern 13 mit als Stößel 12 ausgebildeter Kolbenstange bestehende Brechvorrichtungen gezeigt. Das Halteelement 20 ist oberhalb von zwei -in der Zeichnung der Übersicht halber nicht dargestellten- Dosierrinnen angebracht, wobei jeder Dosierrinne eine Brechvorrichtung zugeordnet ist.

Das Halteelement 20 wird aus zwei halbkreisförmig gebogenen Rohrstücken 21, 22 gebildet, die über an ihren Enden befindliche Flansche 23 zu einem Torus zusammengeschlossen sind. Die Druckluftzylinder 13 mit ihren Stößeln 12 sowie jeweils ein elektromagnetisches Steuerventil 26 für die Druckluftzylinder 13 sind über Trägerplatten 25 fest mit den Rohrstücken 21, 22 verbunden. Zwei der sich jeweils gegenüberliegenden Flansche 23 beider Rohrstücke 21, 22 verfügen über ein Scharnierelement 24, so daß durch Lösen lediglich einer Flanschverbindung der Torus geöffnet und das Innere der Rohrstücke 21, 22 zugänglich gemacht werden kann.

Innerhalb der Rohrstücke 21, 22 sind Druckluftleitungen 27 für die Versorgung der Druckluftzylinder 13 und elektrische Kabel 28 zur Ansteuerung der elektromagnetischen Steuerventile 26 verlegt. Um beim Demontieren der Rohrstücke 21, 22 ein aufwendiges Lösen der Druckluftleitungen 27 und der elektrischen Kabel 28 zu vermeiden, sind diese Elemente kurz vor den Flanschen 23 aus den Rohrstücke 21, 22 herausgeführt und über entsprechend flexible und hinreichend lange Adapter 29 über die genannten Verbindungsstellen hinweg von Rohrstück 21 zu Rohrstück 22 verbunden. Ein Zuleitungselement 30 für die Druckluftleitungen 27 und für die elektrischen Kabel 28 führt zu einer nicht gezeigten Druckluftquelle bzw. einer elektrischen Energiequelle und/oder einer Steuereinrichtung.

### Bezugszeichenliste

Es bezeichnen:
- 1: Dosierrinne
- 2: Vorbehälter
- 3: Wägebehälter
- 4: Kartoffelchip(s)
- 5: Boden
- 6: Seitenwände
- 7: Eingabeseite
- 8: Abgabeseite
- 9: Abschlußwand
- 10: Austrittsöffnung
- 11: Randbereich
- 12: Stößel
- 13: Druckluftzylinder
- 14: Mundstück
- 15: Ansatz
- 16: Führungsschlitze
- 17: Widerlager
- 18: Führungszapfen
- 19: Klappverschlüsse
- 20: Halteelement
- 21: Rohrstück
- 22: Rohrstück
- 23: Flansche
- 24: Scharnierelement
- 25: Trägerplatten
- 26: Steuerventile, elektromagnetische
- 27: Druckluftleitung
- 28: elektrisches Kabel
- 29: Adapter
- 30: Zuleitungselement

## Patentansprüche

1. Vorrichtung zum Beschicken einer einer Verpackungseinrichtung vorgeschalteten Wägeeinrichtung mit zerbrechlichen Lebensmitteln unregelmäßiger Größe und ähnlichen Produkten, insbesondere Kartoffelchips (4), mit
- einer Dosierrinne (1) mit einer Abgabeseite (8),
- einem Wägebehälter (3) und/oder
- einem dem Wägebehälter (3) vorgeschalteten Vorbehälter (2),
**dadurch gekennzeichnet**, daß
- die Dosierrinne (1) an ihrer Abgabeseite (8) mit einer Abschlußwand (9) verschlossen ist,
- an der Abgabeseite (8) eine Austrittsöffnung (10) im Boden (5) der Dosierrinne (1) vorhanden ist,
- die Größe der Austrittsöffnung (10) relativ zur Größe der jeweils zu wiegenden und zu verpackenden Lebensmittel (4) eine maximale Sollgröße definiert,
- der Boden (5) der Dosierrinne (1) einen Randbereich (11) um die Austrittsöffnung (10) und eine Auflage für die Sollgröße überschreitende Lebensmittel (4) bildet,
- mindestens eine Brechvorrichtung (12, 13) der Wägeeinrichtung vorgeschaltet, über der Austrittsöffnung (10) angeordnet und in vertikaler Richtung bewegbar sowie steuerbar ist, und
- Mittel (26) zur Steuerung der Brechvorrichtung (12, 13) vorgesehen sind.

2. Vorrichtung nach Anspruch 1,
**dadurch gekennzeichnet**,
daß
die Brechvorrichtung (12, 13) als ein direkt oder indirekt durch Antriebsmittel (13) betätigbarer Stößel (12) ausgebildet ist.

3. Vorrichtung nach Anspruch 2,
**dadurch gekennzeichnet**, daß
der Stößel (12) durch die Mittel (26) und/oder eine Steuereinrichtung der Wägeeinrichtung in seinem senkrechten Weg in Richtung Austrittsöffnung (10) so begrenzt ist, daß auf der Austrittsöffnung (10) liegende zu große Lebensmittel (4) oder ähnliche Produkte gerade eben gebrochen werden.

4. Vorrichtung nach einem der vorgenannten Ansprüche,
**dadurch gekennzeichnet**, daß
die Austrittsöffnung (10) rund, oval, eckig oder in einer anderen Weise geformt ist.

5. Vorrichtung nach einem der vorgenannten Ansprüche,
**dadurch gekennzeichnet**, daß
das die Austrittsöffnung (10) mit dem Randbereich (11) und die Abschlußwand (9) enthaltende Teilstück der Dosierrinne (1) ein vom übrigen Bereich der Dosierrinne (1) abnehm- und austauschbares Mundstück (14) bildet.

6. Vorrichtung nach Anspruch 5,
**dadurch gekennzeichnet**, daß
das Mundstück (14) mittels ein oder mehrerer Schnellverschlüsse (19) werkzeuglos und/oder mit anderen Befestigungselementen mit der Dosierrinne (1) verbindbar ist.

7. Vorrichtung nach Anspruch 5 oder 6,
**dadurch gekennzeichnet**, daß
die Dosierrinne (1) und/oder das Mundstück (14) mit Führungselementen (16, 17, 18) ausgestattet ist.

8. Vorrichtung nach einem der vorgenannten Ansprüche,
**dadurch gekennzeichnet**, daß
die Brechvorrichtung (12, 13) an einem über der Dosierrinne (1) angeordneten Halteelement (20) befestigt ist.

9. Vorrichtung nach Anspruch 8,
**dadurch gekennzeichnet**, daß
das Halteelement (20) gerade, gebogen, ringförmig geschlossen oder in anderer Weise geformt ist.

10. Vorrichtung nach Anspruch 8 oder 9,
**dadurch gekennzeichnet**, daß
das Halteelement (20) über Mittel (27, 28) zum Übertragen von Energie verfügt und/oder selbst als Energieträger ausgebildet ist.

11. Vorrichtung nach einem der Ansprüche 8 bis 10,
**dadurch gekennzeichnet**, daß
das Halteelement (20) aus mehreren miteinander verbindbaren Einzelteilen (21, 22) besteht.

12. Vorrichtung Anspruch 11,
**dadurch gekennzeichnet**, daß
die Einzelteile (21,22) des Halteelementes (20) starre, flexible, schwenk- und/oder drehbare oder andersartige Befestigungs- oder Kupplungselemente (23, 24) zum Herstellen einer Verbindung untereinander und/oder zusätzliche Adapter (29) für die Mittel (27, 28) zum Übertragen von Energie besitzen.

13. Vorrichtung nach einem der Ansprüche 8-12,
**dadurch gekennzeichnet**, daß
das Halteelement (20) ein Rohr (21, 22) ist.

## Claims

1. Device for loading a weighing device, connected in series ahead of a packaging device, with fragile foodstuffs of irregular size and similar products, especially potato crisps (4), having
- a metering chute (1) with a delivery end (8),
- a weighing receptacle (3) and/or
- a fore-container (2) preceding the weighing container (3),
characterised in that
- the metering chute (1) is closed at its delivery end (8) with a closing wall (9),
- on the delivery side (8) an outlet opening (10) is present in the bottom (5) of the metering chute (1),
- the size of the outlet opening (10) defines a maximum desired size relative to the size of the foodstuffs (4) to be weighed and packaged respectively,
- the bottom (5) of the metering chute (1) forms a perimeter region (11) around the outlet opening (10) and a support for foodstuffs (4) exceeding the desired size,
- at least one breaking device (12, 13) connected in series ahead of the weighing device arranged over the outlet opening (10) and both movable and controllable in the vertical direction, and
- means (26) for controlling the breaking device (12, 13) are provided.

2. Device according to Claim 1,
characterised in that
the breaking device (12, 13) is constructed as a plunger (12) operable directly or indirectly by driving means (13).

3. Device according to Claim 2,
characterised in that
the plunger (12) is restricted in its vertical path in the direction of the outlet opening (10) by the means (26) and/or a control device of the weighing device in such a way that excessively large foodstuffs (4) or similar products located on the outlet opening (10) are just evenly broken.

4. Device according to one of the aforementioned claims,
characterised in that
the outlet opening (10) is round, oval, angular or shaped in a different manner.

5. Device according to one of the aforementioned claims,
characterised in that
the section of the metering chute (1) containing the outlet opening (10) with the perimeter region (11), and the closing wall (9) forms a mouthpiece (14) which is detachable and replaceable with respect to the remainder of the metering chute (1).

6. Device according to Claim 5,
characterised in that
the mouthpiece (14) can be connected to the metering chute (1) without tools by means of one or more quick-action closures (19) and/or by other fastening elements.

7. Device according to Claim 5 or 6,
characterised in that
the metering chute (1) and/or the mouthpiece (14) is equipped with guide elements (16, 17, 18).

8. Device according to one of the aforementioned claims,
characterised in that
the breaking device (12, 13) is fastened to a retaining element (20) arranged above the metering chute (1).

9. Device according to Claim 8,
characterised in that
the retaining element (20) is straight, curved, closed in annular manner or shaped in another fashion.

10. Device according to Claim 8 or 9,
characterised in that
the retaining element (20) disposes of means (27, 28) for the transmission of energy and/or is itself constructed as an energy carrier.

11. Device according to one of Claims 8 to 10,
characterised in that
the retaining element (20) consists of several individual parts (21, 22) capable of connection to one another.

12. Device according to Claim 11,
characterised in that
the individual parts (21, 22) of the retaining element (20) possess rigid, flexible, pivotable and/or rotatable or other types of fastening or coupling elements (23, 24) for establishing a linkage among themselves and/or additional adapters (29) for the means (27, 28) for the transmission of energy.

13. Device according to one of Claims 8-12,
characterised in that
the retaining element (20) is a tube (21, 22).

## Revendications

1. Dispositif pour alimenter un dispositif de dosage, mis en circuit en amont d'un dispositif d'emballage, avec des produits alimentaires fragiles au risque de bris, ayant une taille irrégulière, et des produits analogues, en pariculier des pommes de terre chips (4), avec
- une goulette de dosage (1) équipée d'un côté alimentation (8),
- un récipient de pesée (3) et/ou
- un préréservoir (2), mis en circuit en amont du réservoir de pesée (3),
caractérisé en ce que
- la goulette de dosage (1) est obturée sur son côté d'alimentation (8) par une paroi de fermeture (9),
- une ouverture de sortie (10) est prévue dans le fond (5) de la goulotte de dosage (1), du côté alimentation (8),
- la taille de l'ouverture de sortie (10) définissant, par rapport à la taille des produits alimentaires (4) devant être respectivement pesés et emballés, und taille de consigne maximale,
- le fond (5) de la goulotte de dosage (1) constitue une zone de bordure (11) autour de l'ouverture de sortie (10) et un réceptacle pour les produits alimentaires (4) dépassant la taille de consigne,
- au moins un dispositif de cassure (12, 13) est mis en circuit en amont du dispositif de pesée, disposé au dessus de l'ouverture de sortie (10) et susceptible d'être déplacé ainsi que commandé en direction verticale,
- des moyens (26) sont prévus pour la commande du dispositif de brisures (12, 13) sont prévus

2. Dispositif selon la revendication 1, caractérisé en ce que le dispositif de cassure (12, 13) est réalisé sous forme d'un coulisseau (12) pouvant être actionné directement ou indirectement à l'aide de moyens d'entraînement (13).

3. Dispositif selon la revendication 2, caracatérisé en ce que le coulisseau (12) est limité, dans sa course vericale faite dans la direction de l'ouverture de sortie (10), à l'aide des moyens (26) et/ou d'un dispositif de commande du dispositif de pesée, de telle manière que les produits alimentaires (4) trop gros, ou les produits analogues que se trouvent sur l'ouverture de sortie (10) soient justement brisés.

4. Dispositif selon l'une des revendications précédentes, caractérisé en ce que l'ouverture de sortie (10) est de forme ronde, ovale, polygonale ou bien autre.

5. Dispositif selon des revendications précédentes, caractérisé en ce que la pièce partielle, contenant l'ouverture de sortie (10), avec la zone de bordure (11) et la paroi de fermeture (9), de la goulotte de dosage (1), constitue une pièce d'embouchure (14), susceptible d'être enlevée et remplacée vis-à-vis de la zone restante de la goulotte de dosage (1).

6. Dispositif selon la revendications 5, caractérisé en ce que la pièce d'embouchure (14) est susceptible d'être reliée, à l'aide d'un ou plusieurs raccords rapide (19), sans outils, et/ou à l'aide d'autres éléments de fixation, à la goulotte de dosage (1).

7. Dispositif selon la revendication 5 ou 6, caractérisé en ce que la goulotte de dosage (1) et/ou la pièce d'embouchure (14) est équipée d'éléments de guidage (16, 17, 18).

8. Dispositif selon l'une des revendications précédentes, caractérisé en ce que le dispositif de cassure (12, 13) est fixé sur un élément support (20) disposé au-dessus de la goulotte de dosage (1).

9. Dispositif selon la revendication 8, caractérisé en ce que l'élément support (20) est de forme rectiligne, coudée, annulaire, fermée ou autre.

10. Dispositif selon la revendication 8 ou 9, caractérisé en ce que l'élément de maintien (20) dispose de moyens (27, 28) destinés à transmettre de l'énergie et/ou est lui-même réalisé sous forme de support d'énergie.

11. Dispositif selon l'une des revendications 8 à 10, caractérisé en ce que l'élément de maintien (20) est constitue de plusieurs pièces individuelles (21, 22) pouvant être reliées ensemble.

12. Dispositif selon la revendication 11, caractérisé en ce que les pièces individuelle (21, 22) de l'élément de maintien (20) comportent des éléments de fixation ou d'accouplement (23, 24) rigides, flexibles, pivotants et/ou tournants ou autres, afin d'établir une liaison entre eux, et/ou des adaptateurs (29) supplémentaires destinés aux moyens (27, 28), pour transmettre de l'énergie.

13. Dispositif selon des revendications 8 à 12, caractérisé en ce que l'élément da maintien (20) est un tube (21, 22).
